# EUROPEAN PATENT SPECIFICATION

(11) **EP 3 663 828 B1**
(45) Date of publication and mention of the grant of the patent: **01.10.2025**
(21) Application number: 18841585.5
(22) Date of filing: 31.01.2018
(51) Int. Cl.: G02B 7/00, G02B 7/02, G02B 7/18, G03B 21/14, G03F 7/20

(54) **OPTICAL LENS FIXING DEVICE AND OPTICAL PROJECTION SYSTEM**
BEFESTIGUNGSVORRICHTUNG FÜR OPTISCHE LINSEN UND OPTISCHES PROJEKTIONSSYSTEM
DISPOSITIF DE FIXATION DE LENTILLE OPTIQUE ET SYSTÈME DE PROJECTION OPTIQUE

(30) Priority: 31.07.2017 CN 201720937318 U
(43) Date of publication of application: 10.06.2020
(73) Proprietor: APPOTRONICS CORPORATION LIMITED, Shenzhen, Guangdong 518000 (CN)
(72) Inventor: ZHOU, Zhengping, Shenzhen Guangdong 518000 (CN); LI, Yi, Shenzhen Guangdong 518000 (CN)
(74) Representative: DREISS Patentanwälte PartG mbB
(86) International application number: PCT/CN2018/074758
(87) International publication number: WO 2019/024473

(56) References cited:
- EP-A1- 0 243 893
- EP-B1- 0 243 893
- WO-A1-02/052624
- CN-A- 102 565 980
- CN-A- 104 166 209
- CN-A- 104 166 209
- CN-A- 106 154 484
- CN-U- 206 002 745
- FR-A1- 2 428 852
- JP-A- 2004 117 931
- US-A- 2 571 187
- US-A- 4 929 054
- US-A1- 2007 195 436
- US-A1- 2008 055 553

## Description

### TECHNICAL FIELD

The present disclosure relates to the technical field of optical devices, and more particularly, to an optical lens fixing device and an optical projection system.

### BACKGROUND

At present, optical projection technology is widely used in people's daily life. It can be seen that optical projection systems are used everywhere such as in conferences, lectures or entertainment venues.

In the optical projection system in the related art, designs of light sources are increasingly pursuing miniaturization, and light path designs are becoming more and more complicated, so that a large amount of stray light is irradiated on a structural member for fixing an optical lens due to converging of several paths of light at a light combining position, while the structural members fixing the optical lenses are generally stainless-steel spring pieces. However, in high-power light sources, intensity of the stray light is very so strong that, under long-term irradiation, the stainless-steel spring piece tends to become yellow and fail and generates volatile substances, which seriously affects optical performance. Moreover, in the optical projection system in the related art, the optical lens is generally fixed by a direct spring piece (no protection device is provided) or by glue, thus reliability and stability is poor.

Prior art documents EP 0243893 A1 relates to a lens mount including a lens cell wherein a lens is mounted through flexures, WO 02052624 A1 relates to an exposure device, optical member mounting member, optical member detaching jig and method thereof, US 2571187 A relates to mounts for optical elements such as lenses and mirrors, and FR 2428852 A1 is also relevant thereto.

Therefore, it is necessary to provide a new optical lens fixing device and an optical projection system to solve the above problems.

### SUMMARY

In view of the above shortcomings in the related art, the present disclosure provides according to the invention an optical lens fixing device as defined in claim 1 and an optical projection system as defined in claim 10 with good optical performance, high reliability and high stability.

The present disclosure provides an optical lens fixing device including an optical lens holder configured to support an optical lens, and a pressing plate protection sheath assembly configured to fix the optical lens to the optical lens holder, wherein the pressing plate protection sheath assembly includes a protection sheath and a pressing plate, the protection sheath is fixed to the optical lens holder, a receiving recess is provided in the protection sheath, the pressing plate is fixed to and received in the receiving recess, and the pressing plate and the protection sheath jointly clamp the optical lens.

The protection sheath includes a bottom wall and two side walls disposed at two sides of the bottom wall, the bottom wall and the two side walls together define the receiving recess, and the pressing plate is fixed to the bottom wall.

A mounting hole is provided in the bottom wall, a fixing hole is provided in the pressing plate, the optical lens fixing device further includes a first fixing member, and the first fixing member passes through the mounting hole and the fixing hole to fix the optical lens to the bottom wall.

The pressing plate includes a first mating portion, a second mating portion, and a third mating portion which are sequentially connected, and the fixing hole is provided in the first mating portion; the second mating portion and the first mating portion are arranged in an inverted L shape and extend in a direction opposite to the bottom wall of the protection sheath.

Preferably, the third mating portion is connected to an end of the second mating portion opposite to the first mating portion.

Preferably, the optical lens fixing device further includes a second fixing member, and the second fixing member passes through the protection sheath and the supporting pillar to fix the protection sheath to the supporting pillar.

Preferably, the optical lens holder further includes a limiting portion extending from the body portion and connecting the two supporting pillars, and the limiting portion is provided with a limiting groove for holding an optical lens.

Preferably, the body portion, the supporting pillars, and the limiting portion are formed into one piece.

Preferably, the protection sheath is made of aluminum, and the pressing plate is made of stainless-steel.

Preferably, the optical lens holder includes a body portion and two supporting pillars extending from the body portion and spaced apart from each other, two protection sheaths are provided, and the two protection sheaths are respectively and correspondingly fixed to the two supporting pillars.

The present disclosure further provides an optical projection system including the optical lens fixing device according to the present disclosure and an optical lens fixed to the optical lens fixing device.

Compared with the related art, in the optical lens fixing device and the optical projection system of the present disclosure, the pressing plate for clamping and fixing the optical lens is wrapped and fixed by providing the protection sheath, and the two are formed into one piece and jointly fixed on the optical lens holder, so as to avoid a phenomenon such as discoloration or volatilization caused by stray light directly irradiating on the pressing plate, such that the optical lens fixing device and the optical projection system have good optical performance, high reliability and high stability.

### BRIEF DESCRIPTION OF DRAWINGS

The present disclosure will be described in detail below with reference to the drawings. The above or other aspects of the present disclosure will become clearer and easier to understand through the detailed description in conjunction with the following drawings. In the drawings:
FIG. 1 is a structural schematic view of an optical lens fixing device of the present disclosure with an optical lens being assembled on the optical lens fixing device.
FIG. 2 is an exploded partial structural view of an optical lens fixing device of the present disclosure with an optical lens being assembled on the optical lens fixing device.
FIG. 3 is an exploded perspective structural view of a pressing plate protection sheath assembly of an optical lens fixing device of the present disclosure.

### DESCRIPTION OF EMBODIMENTS

Specific embodiments of the present disclosure will be described in detail below with reference to the drawings.

The specific embodiments/examples described herein are particularly specific embodiments of the present disclosure, which are used to explain the concept of the present disclosure, and are explanatory and exemplary, and should not be construed as limiting the embodiments of the present disclosure and the scope of the present disclosure. In addition to the embodiments described herein, those skilled in the art can also adopt other technical solutions based on the content disclosed in the claims and the specification of this application, these technical solutions include any technical solution obtained by making obvious replacements and modifications to the embodiments described herein and are all within the protection scope of the claims.

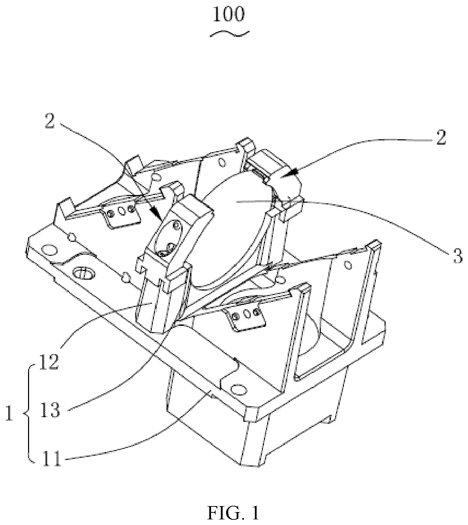

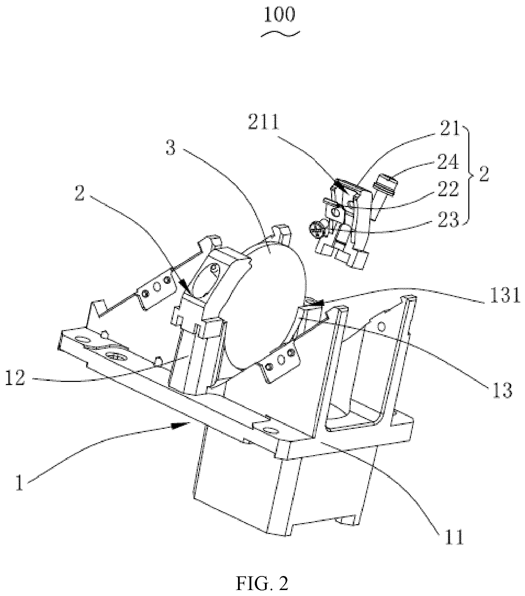

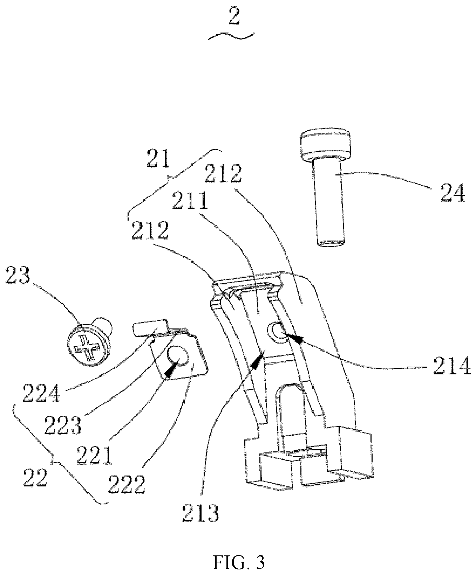

Referring to FIGs. 1-3, the present disclosure provides an optical lens fixing device 100 for fixing an optical lens 3. The optical lens fixing device 100 includes an optical lens holder 1 and a pressing plate protection sheath assembly 2 provided on the optical lens holder 1.

The optical lens holder 1 is configured to support the optical lens 3. The optical lens holder 1 includes a body portion 11, at least two supporting pillars 12 extending from the body portion 11 and spaced apart from each other, and a limiting portion 13 extending from the body portion 11 and connecting the two supporting pillars 12.

The body portion 11 is configured to form fixed connection with other components, such as a projector housing.

The supporting pillar 12 is configured to support the optical lens 3 in a first direction, and the limiting portion 13 is configured to support the optical lens 3 in a second direction. In this embodiment, the first direction and the second direction are perpendicular to each other.

The limiting portion 13 is further provided with a limiting groove 131, and the limiting groove 131 is configured to receive and hold the optical lens 3. When assembling, the optical lens 3 can be rapidly positioned by being held in the limiting groove 131, thereby improving assembling efficiency.

In this embodiment, the body portion 11, the supporting pillars 12, and the limiting portion 13 are formed into one piece.

The pressing plate protection sheath assembly 2 is configured to fix the optical lens 3 to the optical lens holder 1. Specifically, the pressing plate protection sheath assembly 2 clamps the optical lens 3 to prevent the optical lens 3 from being separated from the optical lens holder 1. In this embodiment, the pressing plate protection sheath assembly 2 is fixed to the supporting pillar 12 to fix the optical lens 3 on the limiting portion 13 of the optical lens holder 1.

Specifically, the pressing plate protection sheath assembly 2 includes a protection sheath 21, a pressing plate 22, a first fixing member 23, and a second fixing member 24. The first fixing member 23 is configured for locking the pressing plate 22 on the protection sheath 21.

The second fixing member 24 is configured for locking the protection sheath 21 on the supporting pillar 12 of the optical lens holder 1.

The protection sheath 21 includes a fixing portion (not labeled) and a clamping portion (not labeled). The fixing portion is configured for fixing with the supporting pillar 12, and the clamping portion is configured for receiving the pressing plate 22 and the first fixing member 23.

Specifically, the protection sheath 21 includes a bottom wall 211 and two side walls 212. The bottom wall 211 and the two side walls 212 enclose to form a receiving recess 213. The pressing plate 22 clamps the optical lens 3 and is fixed in the receiving recess 213 through the first fixing member 23. Moreover, the bottom wall 211 has a certain arc to match the optical lens 3.

The bottom wall 211 has a mounting hole 214. The pressing plate 22 is provided with a fixing hole 221 to match the first fixing member 23. The first fixing member 23 passes through the mounting hole 214 and the fixing hole 221 to fix the pressing plate 22 on the bottom wall 211.

The second fixing member 24 passes through the protection sheath 21 and the supporting pillar 12 to fix the protection sheath 21 on the supporting pillar 12.

The pressing plate 22 includes a first mating portion 222, a second mating portion 223, and a third mating portion 224 that are sequentially connected and formed into one piece. A fixing hole 221 is provided in the first mating portion 222, and the fixing hole 221 is configured to mate with a mounting hole 214 in the protection sheath 21 to fix the pressing plate 22 on the bottom wall 211 of the protection sheath 21. The second mating portion 223 and the first mating portion 222 are disposed substantially in an inverted "L" shape and extend in a direction opposite to the bottom wall 211 of the protection sheath 21. The third mating portion 224 is connected to an end of the second mating portion 223 opposite to the first mating portion 222, and the third mating portion 224 is configured to be clamped in a mating portion (not shown) on the protection sheath 21, to clamp the pressing plate 22 in the protection sheath 21 so as to prevent the pressing plate 22 from being separated from the protection sheath 21. Preferably, the first mating portion 222 and the second mating portion 223 each have a certain arc to match an edge of the optical lens 3.

The pressing plate 22 has certain elasticity, such that it can still clamp with the edge of the optical lens 3 in the case that the first fixing member 23 is kept clamped.

In this embodiment, the protection sheath 21 is made of an aluminum material, and the pressing plate 22 is made of a stainless-steel material.

When the pressing plate 22 is fixed on the protection sheath 21, the third mating portion 224 is clamped on the protection sheath 21, and then the first mating portion 222 is fixed on the bottom wall 211 of the protection sheath 21 by the first fixing member 23. In this case, the pressing plate 22 is fixed on the bottom wall 211, and the side wall 212 completely shields the pressing plate 22 in a direction perpendicular to the bottom wall 211, so that the pressing plate 22 is completely received in the receiving space 213. In addition, the protection sheath 21 has larger size than the pressing plate 22 so that the protection sheath 21 forms a wrapping structure for the pressing plate.

In this embodiment, the first fixing member 23 and the second fixing member 24 are both screws.

It can be understood that the first fixing member 23 and the second fixing member 24 may also be a combination of a bolt and a nut or other elements.

It can be understood that, in other embodiments, the pressing plate 22 may be connected by other manners, such as bonding or welding.

The pressing plate protection sheath assembly 2 is disposed corresponding to the supporting pillar 12 so as to be respectively fixed to the two supporting pillars 12. The structure of the two pressing plate protection sheath assemblies 2 is highly versatile, thereby reducing production costs.

In this embodiment, the number of the pressing plate protection sheath assemblies 2 is two, and the two pressing plate protection sheath assemblies 2 are respectively and correspondingly disposed on the two supporting pillars 12 to lock the optical lens 3 on the limiting portion 13.

When the pressing plate 22 and the protection sheath 21 jointly clamp the optical lens 3, the first mating portion 222 of the pressing plate 22 clamps the optical lens 3 in a first direction, and the third matching portion 224 clamps the optical lens 3 in a second direction, so as to cooperate with the optical lens holder 1 to stably fix the optical lens 3 to the holder 1. In addition, the protection sheath 21 is made of an aluminum material, and no discoloration or volatilization occurs when it is irradiated by light, so that an optical performance will not be affected, while the pressing plate 22 is completely received in the protection sheath 21, and the side wall 212 of the protection sheath 21 can block the light of the light source from irradiating on the pressing plate 22, to avoid problems such as discoloration or volatilization caused by light directly irradiating on the pressing plate 22, thereby resulting in good optical performance and high reliability of the optical lens fixing device.

The present disclosure also provides an optical projection system (not shown), which includes the optical lens fixing device 100 provided by the present disclosure and the optical lens 3 fixed to the optical lens fixing device 100.

Compared with the related art, in the optical lens fixing device and the optical projection system of the present disclosure, the pressing plate for clamping and fixing the optical lens is wrapped and fixed by providing the protection sheath made of an aluminum material, and the two are formed into one piece and jointly fixed on the optical lens holder, so as to prevent the stray light from directly irradiating on the pressing plate, while the protection sheath is made of an aluminum material, and the phenomenon such as discoloration or volatilization will not occur under light irradiation, such that the optical lens fixing device and the optical projection system have good optical performance, high reliability and high stability.

It should be noted that the embodiments described above with reference to the drawings are only used to illustrate the present disclosure but not to limit the scope of the present disclosure. Those of ordinary skilled in the art should understand that modifications or equivalent replacements made to the present disclosure without departing from the scope of the claims. In addition, terms in a singular form include plural forms unless the context indicates otherwise, and vice versa. Further, all or part of any embodiment may be used in combination with all or part of any other embodiment within the scope of the claims.

## Claims

1. An optical lens fixing device (100), comprising:
an optical lens holder (1) configured to support an optical lens (3); and
a pressing plate protection sheath assembly (2) configured to fix the optical lens (3) to the optical lens holder (1),
wherein the pressing plate protection sheath assembly (2) comprises a protection sheath (21) and a pressing plate (22), the protection sheath (21) is fixed to the optical lens holder (1), a receiving recess (213) is provided in the protection sheath (21), the pressing plate (22) is fixed to and received in the receiving recess (213), and the pressing plate (22) and the protection sheath (21) jointly clamp the optical lens (3),
wherein the protection sheath (21) comprises a bottom wall (211) and two side walls disposed at two sides of the bottom wall (211), the bottom wall (211) and the two side walls together define the receiving recess (213), and the pressing plate (22) is fixed to the bottom wall (211),
wherein a mounting hole (214) is provided in the bottom wall (211), a fixing hole (221) is provided in the pressing plate (22), the optical lens fixing device (100) further comprises a first fixing member (23), and the first fixing member (23) passes through the mounting hole (214) and the fixing hole (221) to fix the pressing plate (22) to the bottom wall (211),
wherein the pressing plate (22) comprises a first mating portion (222), a second mating portion (223), and a third mating portion (224) which are sequentially connected, and the fixing hole (221) is provided in the first mating portion (222), and
wherein the second mating portion (223) and the first mating portion (222) are arranged in an inverted L shape and extend in a direction opposite to the bottom wall (211) of the protection sheath (21).

2. The optical lens fixing device (100) according to claim 1, wherein the bottom wall (211) has an arc portion with a shape matching the optical lens (3).

3. The optical lens fixing device (100) according to claim 2, wherein the third mating portion (224) is connected to an end of the second mating portion (223) opposite to the first mating portion (222).

4. The optical lens fixing device (100) according to claim 2, wherein the first mating portion (222) and the second mating portion (223) each have an arc portion with a shape matching an edge of the optical lens (3).

5. The optical lens fixing device (100) according to claim 1, wherein the optical lens holder (1) comprises a body portion (11) and two supporting pillars (12) extending from the body portion (11) and spaced apart from each other, two protection sheaths (21) are provided, and the two protection sheaths (21) are respectively and correspondingly fixed to the two supporting pillars (12).

6. The optical lens fixing device (100) according to claim 5, wherein the optical lens fixing device (100) further comprises a second fixing member (24), and the second fixing member (24) passes through the protection sheath (21) and the supporting pillar (12) to fix the protection sheath (21) to the supporting pillar (12).

7. The optical lens fixing device (100) according to claim 5, wherein the optical lens holder (1) further comprises a limiting portion (13) extending from the body portion (11) and connecting the two supporting pillars (12), and the limiting portion (13) is provided with a limiting groove (131) for holding an optical lens (3).

8. The optical lens fixing device (100) according to claim 7, wherein the body portion (11), the supporting pillars (12), and the limiting portion (13) are formed into one piece.

9. The optical lens fixing device (100) according to claim 1, wherein the protection sheath (21) is made of aluminum, and the pressing plate (22) is made of stainless-steel.

10. An optical projection system, comprising the optical lens fixing device (100) according to any one of claims 1 to 10 and an optical lens (3) fixed to the optical lens holder (1).

## Patentansprüche

1. Befestigungsvorrichtung (100) für eine optische Linse, umfassend:
einen Halter (1) für die optische Linse, der konfiguriert ist, um eine optische Linse (3) zu tragen; und
eine Pressplatten-Schutzhüllenbaugruppe (2), die konfiguriert ist, um die optische Linse (3) an dem Halter (1) für die optische Linse zu befestigen,
wobei die Pressplatten-Schutzhüllenbaugruppe (2) eine Schutzhülle (21) und eine Pressplatte (22) umfasst, die Schutzhülle (21) an dem Halter (1) für die optische Linse befestigt ist, eine Aufnahmevertiefung (213) in der Schutzhülle (21) bereitgestellt ist, die Pressplatte (22) an der Aufnahmevertiefung (213) befestigt und darin aufgenommen ist und die Pressplatte (22) und die Schutzhülle (21) die optische Linse (3) gemeinsam einklemmen,
wobei die Schutzhülle (21) eine Bodenwand (211) und zwei Seitenwände umfasst, die an zwei Seiten der Bodenwand (211) eingerichtet sind, die Bodenwand (211) und die zwei Seitenwände zusammen die Aufnahmeaussparung (213) definieren und die Pressplatte (22) an der Bodenwand (211) befestigt ist,
wobei ein Montageloch (214) in der Bodenwand (211) bereitgestellt ist, ein Befestigungsloch (221) in der Pressplatte (22) bereitgestellt ist, die Befestigungsvorrichtung (100) für die optische Linse ferner ein erstes Befestigungselement (23) umfasst und das erste Befestigungselement (23) durch das Montageloch (214) und das Befestigungsloch (221) verläuft, um die Pressplatte (22) an der Bodenwand (211) zu befestigen,
wobei die Pressplatte (22) einen ersten Anschlussabschnitt (222), einen zweiten Anschlussabschnitt (223) und einen dritten Anschlussabschnitt (224) umfasst, die nacheinander verbunden sind, und das Befestigungsloch (221) in dem ersten Anschlussabschnitt (222) bereitgestellt ist, und
wobei der zweite Anschlussabschnitt (223) und der erste Anschlussabschnitt (222) in Form eines umgekehrten L angeordnet sind und sich in eine Richtung erstrecken, die der Bodenwand (211) der Schutzhülle (21) gegenüberliegt.

2. Befestigungsvorrichtung (100) für eine optische Linse nach Anspruch 1, wobei die Bodenwand (211) einen Bogenabschnitt mit einer Form aufweist, die zu der optischen Linse (3) passt.

3. Befestigungsvorrichtung (100) für eine optische Linse Anspruch 2, wobei der dritte Anschlussabschnitt (224) mit einem Ende des zweiten Anschlussabschnitts (223) verbunden ist, das dem ersten Anschlussabschnitt (222) gegenüberliegt.

4. Befestigungsvorrichtung (100) für eine optische Linse nach Anspruch 2, wobei der erste Anschlussabschnitt (222) und der zweite Anschlussabschnitt (223) jeweils einen Bogenabschnitt mit einer Form aufweisen, die zu einer Kante der optischen Linse (3) passt.

5. Befestigungsvorrichtung (100) für eine optische Linse nach Anspruch 1, wobei der Halter (1) für die optische Linse einen Körperabschnitt (11) und zwei Trägersäulen (12) umfasst, die sich von dem Körperabschnitt (11) erstrecken und voneinander beabstandet sind, wobei zwei Schutzhüllen (21) bereitgestellt sind und die zwei Schutzhüllen (21) jeweils und entsprechend an den zwei Trägersäulen (12) befestigt sind.

6. Befestigungsvorrichtung (100) für eine optische Linse nach Anspruch 5, wobei die Befestigungsvorrichtung (100) für eine optische Linse ferner ein zweites Befestigungselement (24) umfasst und das zweite Befestigungselement (24) durch die Schutzhülle (21) und die Trägersäule (12) verläuft, um die Schutzhülle (21) an der Trägersäule (12) zu befestigen.

7. Befestigungsvorrichtung (100) für eine optische Linse nach Anspruch 5, wobei der Halter (1) für die optische Linse ferner einen Begrenzungsabschnitt (13) umfasst, der sich von dem Körperabschnitt (11) erstreckt und die zwei Trägersäulen (12) verbindet, und der Begrenzungsabschnitt (13) mit einer Begrenzungsnut (131) zum Halten einer optischen Linse (3) versehen ist.

8. Befestigungsvorrichtung (100) für eine optische Linse nach Anspruch 7, wobei der Körperabschnitt (11), die Trägersäulen (12) und der Begrenzungsabschnitt (13) aus einem Stück ausgebildet sind.

9. Befestigungsvorrichtung (100) für eine optische Linse nach Anspruch 1, wobei die Schutzhülle (21) aus Aluminium gefertigt ist und die Pressplatte (22) aus rostfreiem Stahl gefertigt ist.

10. Optisches Projektionssystem, umfassend die Befestigungsvorrichtung (100) für eine optische Linse nach einem der Ansprüche 1 bis 10 und eine optische Linse (3), die an dem Halter (1) für die optische Linse befestigt ist.

## Revendications

1. Dispositif de fixation de lentilles optiques (100), comprenant :
un support de lentille optique (1) conçu pour supporter une lentille optique (3) ;
et
un ensemble de gaine de protection de plaque de pression (2) conçu pour fixer la lentille optique (3) au support de lentille optique (1),
dans lequel l'ensemble gaine de protection plaque de pression (2) comprend une gaine de protection (21) et une plaque de pression (22), la gaine de protection (21) est fixée au support de lentille optique (1), une cavité de réception (213) est prévue dans la gaine de protection (21), la plaque de pression (22) est fixée et reçue dans la cavité de réception (213), et la plaque de pression (22) et la gaine de protection (21) serrent conjointement la lentille optique (3),
dans lequel la gaine de protection (21) comprend une paroi de fond (211) et deux parois latérales disposées de part et d'autre de la paroi de fond (211), la paroi de fond (211) et les deux parois latérales définissent ensemble la cavité de réception (213), et la plaque de pression (22) est fixée à la paroi de fond (211),
dans lequel un trou de montage (214) est prévu dans la paroi inférieure (211), un trou de fixation (221) est prévu dans la plaque de pression (22), le dispositif de fixation de lentilles optiques (100) comprend en outre un premier élément de fixation (23), et le premier élément de fixation (23) passe à travers le trou de montage (214) et le trou de fixation (221) pour fixer la plaque de pression (22) à la paroi inférieure (211),
dans lequel la plaque de pression (22) comprend une première partie d'accouplement (222), une deuxième partie d'accouplement (223) et une troisième partie d'accouplement (224) qui sont reliées de manière séquentielle, et le trou de fixation (221) est prévu dans la première partie d'accouplement (222), et
dans lequel la seconde partie d'accouplement (223) et la première partie d'accouplement (222) sont disposées en forme de L inversé et s'étendent dans une direction opposée à la paroi inférieure (211) de la gaine de protection (21).

2. Dispositif de fixation de lentilles optiques (100) selon la revendication 1, dans lequel la paroi inférieure (211) présente une partie en arc de cercle dont la forme correspond à celle de la lentille optique (3).

3. Dispositif de fixation de lentilles optiques (100) selon la revendication 2, dans lequel la troisième partie d'accouplement (224) est reliée à une extrémité de la deuxième partie d'accouplement (223) opposée à la première partie d'accouplement (222).

4. Dispositif de fixation de lentilles optiques (100) selon la revendication 2, dans lequel la première partie d'accouplement (222) et la deuxième partie d'accouplement (223) ont chacune une partie en arc dont la forme correspond à un bord de la lentille optique (3).

5. Dispositif de fixation de lentilles optiques (100) selon la revendication 1, dans lequel le support de lentilles optiques (1) comprend une partie de corps (11) et deux piliers de support (12) s'étendant à partir de la partie de corps (11) et espacés l'un de l'autre, deux gaines de protection (21) sont fournies, et les deux gaines de protection (21) sont fixées respectivement et de manière correspondante aux deux piliers de support (12).

6. Dispositif de fixation de lentilles optiques (100) selon la revendication 5, dans lequel le dispositif de fixation de lentilles optiques (100) comprend en outre un deuxième élément de fixation (24), et le deuxième élément de fixation (24) passe à travers la gaine de protection (21) et le pilier de support (12) pour fixer la gaine de protection (21) au pilier de support (12).

7. Dispositif de fixation de lentilles optiques (100) selon la revendication 5, dans lequel le support de lentilles optiques (1) comprend en outre une partie de limitation (13) s'étendant à partir de la partie du corps (11) et reliant les deux piliers de support (12), et la partie de limitation (13) est pourvue d'une rainure de limitation (131) pour maintenir une lentille optique (3).

8. Dispositif de fixation de lentilles optiques (100) selon la revendication 7, dans lequel la partie du corps (11), les piliers de support (12) et la partie de limitation (13) sont formés d'une seule pièce.

9. Dispositif de fixation de lentilles optiques (100) selon la revendication 1, dans lequel la gaine de protection (21) est en aluminium et la plaque de pression (22) est en acier inoxydable.

10. Système de projection optique, comprenant le dispositif de fixation de lentilles optiques (100) selon l'une quelconque des revendications 1 à 10 et une lentille optique (3) fixée au support de lentilles optiques (1).
